# EUROPEAN PATENT APPLICATION

(11) **EP 3 165 095 A1**
(43) Date of publication of application: **10.05.2017**
(21) Application number: 15192696.1
(22) Date of filing: 03.11.2015
(51) Int. Cl.: A21D 2/16, A21D 10/00, B65D 71/50, B65D 81/32

(54) **BAKING KIT**

(71) Applicant: Unilever N.V., 3013 AL Rotterdam (NL); Unilever PLC, a company registered in England and Wales under company no. 41424, London EC4Y 0DY (GB)
(72) Inventor: van de POLL, Jonkheer Theodor Hendrik, 3133 AT Vlaardingen (NL)
(74) Representative: Wurfbain, Gilles L.

(57) **Abstract**

The present invention relates a kit for preparing a baked food product, the kit comprising a bag with ingredients for the baked food product, wherein the bag contains a first compartment containing ingredients in powdery or granular form comprising flour, egg powder and sweetener, a second compartment containing fat, which fat phase is liquid at RT, a third compartment containing water, or is empty, wherein the bag comprises non-permanent seals, preferably peel seals, between the compartments. The kit of the invention showed a surprisingly fast manufacturing time, does not need preservatives and provided a fast preparation time for dough of a baked food product.

## Description

The present invention relates to a kit for preparing a baked food product, a process to prepare said kit and a process for preparing a baked food product involving the use of said kit.

A kit for baking a food product such as a cake has been described in the art, for example in US6013294. This document describes the preparation of a cake batter, wherein an aqueous component and a low water-activity component are prepared and stored in a container until preparation of the cake.

Several disadvantages are related to this concept. US6013294 requires a distribution of dry ingredients in either the aqueous component, such as egg powder and gums, or in the low water activity component, such as oil and flour, respectively, to ensure their physical properties in the final dough composition. Consequently, the aqueous phase requires a pH of lower than 4.5 and the presence of antimicrobial components to ensure microbial stability. The resulting impact on taste should be compensated for by acid-neutralising chemicals in a different component of the kit. Obviously, such chemicals are not necessarily desired by all consumers.

A further disadvantage of the product of US6013294 is that production of the low water-activity component involves extensive mixing times, which may relate to providing homogeneity- and coating requirements, which is however not efficient for mass-production.

A further drawback is that the water in the product of US603294 is necessarily incorporated during production, which increases transport costs and decreases flexibility.

A need exist for a kit to prepare baked food products, wherein both the production of such a kit as well as the production of the baking product are as fast and easy as possible. Slow production in the factory results in high costs. There is a need for a kit that does not require preservatives such as acids and acid-neutralisers, as these are not desired by the consumer, wherein preferably the baking functionality is not affected. The kit preferably provides for flexibility of adding water just before starting preparation of the dough, and relatively low transportation costs.

A further need is to provide the kit in a multi-compartment design. The design of such a kit should preferably on the one hand allow kneading of the ingredients, but at the other hand reduce the risk of contact between certain ingredients, until the moment of use. For example, the risk of tearing of a seal, as can sometimes happen during production or transportation by the manufacturer or the consumer, should not ruin the product because of undesired premature mixing of ingredients.

Further, an elaborate or inefficient preparation process of the baked product by the consumer results in sub-optimal consumer perception, especially when the consumer is a child experiencing his or her own first cake-baking experience. The kit therefore should allow for fast and easy preparation of the baked product, including easy dispensing from the dough into a baking mould.

It was observed that the above mentioned aims were met by:
A kit for preparing a baked food product, the kit comprising a bag, wherein the bag comprises:
   - a first compartment (1) containing ingredients in powdery or granular form, comprising flour, egg powder and sweetener,
   - a second compartment (2) containing fat, preferably a water in oil emulsion or an oil in water emulsion, which fat is liquid at room temperature, preferably at 5°C,
   - a third compartment (3) containing water, or is empty,
wherein the bag comprises non-permanent seals (9), preferably peel seals, between the compartments.

In a further aspect, the invention relates to a process to prepare a kit according to the invention, the process comprising the steps of:
a. providing a sheet of thermoplastic polymer foil and shaping said sheet into the form of a bag, or providing a bag made of thermoplastic polymer,
b. applying to said sheet in the form of a bag or to said bag ingredients in powdery or granular form, comprising flour, egg powder and sweetener, fat and optionally water and providing non-permanent seals, preferably peel seals, to it, to result in a bag comprising:
   - a first compartment (1) containing ingredients in powdery or granular form, comprising flour, egg powder and sweetener,
   - a second compartment (2) containing fat, preferably an water in oil emulsion or an oil in water emulsion, which fat is liquid at room temperature , preferably at 5°C,
   - a third compartment (3) containing water, or is empty.

In a further aspect the invention relates to a process for preparing a baked food product, the process comprising the steps of:
a. Providing a kit according to the invention,
b. In case the third compartment (3) is empty, adding water to the third compartment and closing it,
c. Kneading the kit to allow opening of the non-permanent seals, preferably peel seals and to allow mixing of the contents of the compartments together to obtain a homogenous mixture,
d. Opening the bag,
f. Transferring the mixture resulting from step c) in a mould,
g. Heating the mixture in the mould,
to result in a baked food product.

### Description of the figures

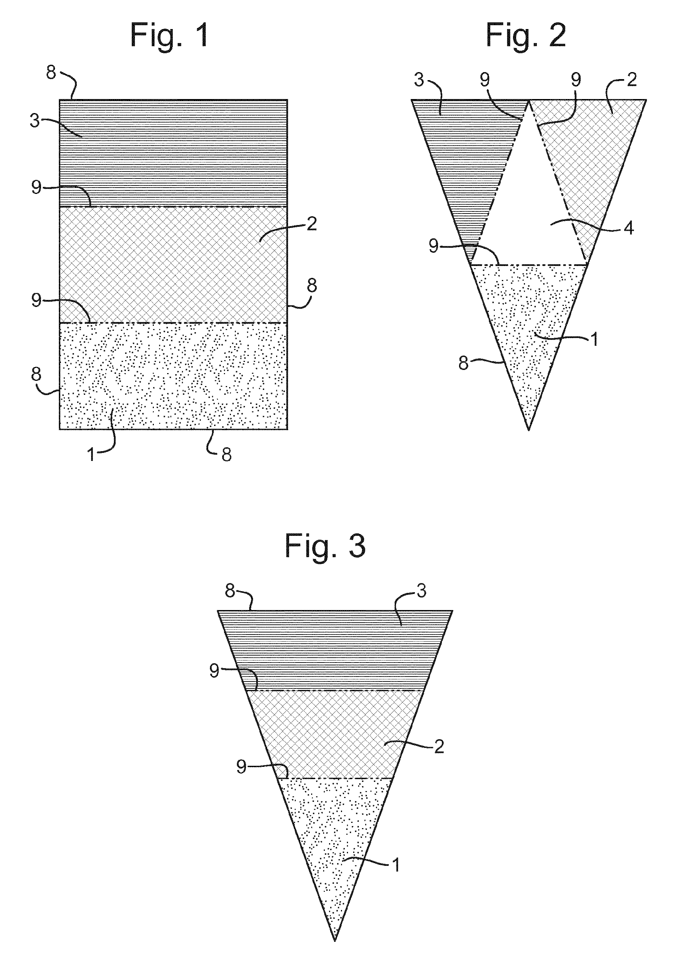

Figure 1 shows a schematic drawing of a kit according to the invention. The outer edges are formed by a permanent seal (8). The kit comprises three compartments (1), (2), (3), which are separated from each other by two non-permanent seals (9).
Figure 2 shows a schematic drawing of a kit according to the invention, wherein the kit has a triangular shape. The outer edges are sealed with a permanent seal (8). The bag comprises four compartments (1), (2), (3), (4), which are separated from each other by a non-permanent seals 9.
Figure 3 shows a schematic drawing of a kit according to the invention. The kit has a triangular shape. The outer edges are sealed by a permanent seal (8). The compartments (1), (2) and (3) are separated from each other by two non-permanent seals (9).
Figures 4 to 8 show schematic drawings of the preparation of a kit according to the invention. In Figure 4 is shown that two permanent seals are applied to connect two layers of thermoplastic polymer foil to each other, thereby providing a bag-shape. In
Figure 5 shows addition of powdery material into the formed bag. Figure 6 shows with bold lines the application of seals, wherein (9a), (9b) and (9c) are non-permanent seals and (8) are permanent seals at the top of the bag. Note that two openings are present at the top of the bag. A fourth compartment (4) is formed in the middle of the bag, thereby providing two seals between each of the first, second and third compartment (1), (2) and (3) respectively.
Figure 7 shows the filling of the second and third compartment, using a filling device (5).
Figure 8 shows the closing of the bag using a permanent seal (8) at the top of the bag.
Figure 9 shows an embodiment of the invention wherein the third compartment (3) is left empty and wherein the third compartment has an opening (10) and has closing means (7) in the form of flaps that can be closed by the user by a knot. The second compartment (2) is filled with a single filling means (6).
Figure 10 shows the situation that a permanent seal (8) is applied to close the second compartment (2) after it was filled.
Figure 11 shows how a kit according to the invention, comprising four compartments can be folded efficiently.

### Detailed description of the invention.

The kit of the present invention comprises a bag made of thermoplastic polymer material. The material is impermeable to water and fat. Preferred flexible materials are thermoplastic polymers impermeable to water and fat, and preferably comprise PET, PE, PP or mixtures thereof.

The kit of the invention is a kit for a baked food product. It is preferred that the baked food product is a product with an aerated structure, or more preferred, is a sponge cake type. A sponge cake is known in the art and is based on flour, sugar and egg with an airy, yet firm texture. Especially preferred is that the baked food product is cup cake or muffin. In a first compartment (1) the bag comprises ingredients in powdery or granular form. The ingredients in powdery or granular from, understood as ingredients for the baked food product to be prepared, are more preferably in the form of free flowing powder or granules, most preferably are in the form of free-flowing powder. Consequently, it is not in the form of an emulsion or solution. The powder and granular material has preferably a mesh size of below 1.5, more preferably below 1 mm, most preferably below 0.8 mm. Powder optimally mixes with other ingredients during preparation of the dough. The ingredients in powdery or granular form comprise flour, such as preferably wheat flour, corn flour or mixtures thereof. Especially in case the baked food product is a product with an airy structure, like a sponge cake, herein preferred, the ingredients in powdery or granular form preferably further comprise a leavening agent, preferably a chemical leavening agent, such as NaHCO3 with an acid like citric acid or tartaric acid. Flour is preferably self-rising flour, i.e. flour which comprises a chemical leavening agent, like NaHCO3 with an acid like citric acid or tartaric acid. This provides optimal results in the context of the invention involving a kneading bag. The protein content in the flour is preferably from 7 to 14%, preferably of from 7 to 10wt%, more preferably from 7 to 9wt%, based on the weight of the flour, for optimal kneadibility. Especially in case the baked food product is a sponge cake, flour is preferably present in an amount of from 15 to 40 wt%, more preferably of from 20 to 32 wt%, based on the total weight of the ingredients in the bag. The ingredients in powdery or granular form comprise preferably sweetener, preferably sugar. Sweetener, preferably sugar, is preferably present in an amount of from 17 to 32 wt%, more preferably of from 20 to 30 wt%, based on the total weight of the ingredients in the bag. The ingredients in powdery or granular form comprise egg powder. Egg powder is preferably present in an amount of from 0 to 8 wt%, more preferably from 1 to 8 wt%, even more preferably in an amount of from 2 to 6 wt%, based on the total weight of the ingredients in the bag. The ingredients in powdery or granular form preferably comprise milk powder. Milk powder is preferably present in an amount of from 0 to 2 wt%, more preferably of from 0.5 to 1 wt%, based on the total weight of the ingredients in the bag. The ingredients in powdery or granular form preferably comprise sugar, flour, milk powder and egg powder, in a total amount of from 48 to 65 wt%, preferably 50 to 60 wt%, based on the total weight of the ingredients in the bag. Most preferably, all of the sugar, milk powder, egg powder, flour, when present, are present as dry ingredients in one compartment, i.e. the first compartment (1).

The kit further comprises a second compartment (2) containing fat, preferably in a water in oil emulsion or an oil in water emulsion, which fat, preferably water in oil emulsion or an oil in water emulsion, is liquid at room temperature , preferably at 5°C. Fat and oil are used as synonyms. Especially in case the baked food product is a sponge cake, the fat, preferably an water in oil emulsion or an oil in water emulsion, is preferably present in an amount of from 12 to 29 wt%, preferably of from 20 to 28 wt%, based on the total weight of the ingredients in the bag. The fat, which is most preferably a water-in-oil emulsion, preferably comprises a vegetable oil, butter oil or mixtures thereof, wherein the vegetable oil is preferably liquid at 5°C. More preferably, the fat is one or more of sunflower oil, rapeseed oil, rapeseed oil, canola oil, soybean oil, preferably, the fat, or a water-in-oil emulsion or an oil-in-water emulsion, comprises sunflower oil. In case the second compartment comprises a water-in-oil emulsion, the amount of fat is preferably of from 50 to 99 wt%, more preferably of from 60 to 90 wt%, most preferably from 70 to 82 wt%, based on the weight of the water in oil emulsion. In case the second compartment comprises an oil-in-water emulsion, the amount of fat is preferably of from 50 to 75 wt%, more preferably of from 60 to 75 wt%, based on the weight of the oil-in-water emulsion, The use of non-emulsified fat or fat in the form of a water-in-oil emulsion, compared to an oil-in-water emulsion, is preferred, as it provides a better structuring of the resulting baked food product. Further, the consistency of the dough appeared less sticky, which is an advantage in terms of mixing, emptying the bag and distributing the dough in a mould. The fat, preferably the water-in-oil emulsion or an oil-in-water emulsion, is liquid at room temperature, preferably at 5°C, which is understood as 21 °C. The second compartment (2) preferably comprises margarine, more preferably is margarine. The use of liquid fat, preferably in water-in oil or oil-in-water emulsion, in contrast to solid fat, significantly reduced the preparation time of the kit. Solid fat normally takes significant time and energy to mix it into a dry mixture of other ingredients. Further, when solid fat is used in the kit, preparation of the dough for the baked food product takes a significant amount of kneading time for the consumer. Providing fat in liquid form in a baking kit and separating the fat from the dry mix provides fast manufacturing of the kit, and fast preparation of the baked food product, while maintaining a full baking experience for the consumer when (s)he prepares the dough. Accordingly, most preferably, the second compartment (2) comprises only fat or only a water-in-oil emulsion or an oil-in-water emulsion, most preferably only a water-in-oil emulsion. The second compartment is preferably free from flour, more preferably free from sugar, egg powder, milk powder, flour or mixtures thereof.

The kit further comprises a third compartment (3) containing water, or is empty. Especially when the baked food product is a sponge cake, water is preferably present in an amount of from 15 to 35 wt%, more preferably in an amount of from 20 to 26 wt%, based on the total weight of the ingredients in the bag. Most preferably, the third compartment only comprises water. Accordingly, the third compartment preferably is free of egg powder, more preferably is free from fat, sugar, egg powder, milk powder, starch, flour, or mixtures thereof.

The amount of water and fat taken together is preferably of from 35 to 52 wt%, preferably of from 40 to 50 wt%, based on the total weight of the ingredients in the bag. It is most preferred that the ratio of the sum of the amounts of ingredients in powdery or granular form to the sum of the amounts of fat and water is from 0.9 to 1.5, preferably of from 1.0 to 1.3, for optimal results.

The Aw of the content of the third compartment (3) when containing water is preferably higher than 0.86, preferably higher than 0.9, more preferably higher than 0.995, most preferably is 1.00. The pH is preferably neutral, more preferably of from 6 to 8, most preferably of from 6.5 to 7.5. In case the third compartment is empty, the third compartment is preferably fillable with water and closable. This can be imagined by for example a closable opening (10). Such an opening allows the consumer to add water to the third compartment and close the compartment. Such an arrangement can be preferred to reduce the weight of the kit, thereby providing a reduced impact on the environment during transportation. It is accordingly preferred, especially if the third compartment is empty, that the third compartment comprises an opening (10) and a closing means (7). The closing means can be for example an adhesion strip, a closing strip that includes a relief, an extension that can be used as filling spout and which can be closed by a knot, two extensions of the bag located at the edge of the opening which can be knotted together, etcetera.

The kit of the invention is preferably free from preservatives. Preservatives include for example sorbic acid, or sorbate like potassium sorbate, sodium sorbate or calcium sorbate. In case the bag, preferably the first compartment, comprises baking powder, the baking powder, or ingredients present in this baking powder, is not considered a preservative in this context. Free from preservatives allows the presence of baking powder, e.g. in the first compartment. The kit of the invention is preferably not frozen.

Preferably, the bag has a triangular shape. Such a bag looks preferably like a piping bag, as known in the art. Non-permanent seals (9) are present between the compartments. Therefore, the compartments are preferably separated from each other by non-permanent seals, preferably by peel seals. Such seals, separating compartments, are here referred to as internal seals. The internal seals are impermeable for liquid. It is preferred, that the first (1), the second (2) and the third (3) compartment are separated from each other by non-permanent seals (9), preferably peelable seals. In contrast hereto, any possible outer seals (8), i.e. not between compartments but forming the outer edge of the bag, are permanent seals. Peel seals are known in the art, e.g. from WO2005/071009 or WO94/25356. Peelable seals will open when pressure is applied to the compartments, thereby releasing the content of the compartment and allowing it to mix with the contents of the other compartments. This opening is normally applied by kneading force of the consumer. The skilled person is familiar with the process to provide such non-permanent seals, preferably peel seals, and preferred techniques may involve heat-sealing, ultrasonic sealing. Peel seals are preferred as they allow providing a more guided opening process, allowing more control of the user, adjusted to the forces resulting from kneading and to the length of the seal to be opened, to allow maximum discharge of its content to the rest of the bag. In this way optimal mixture is obtained. It is desired that when the seals are opened by the consumer, they separate over a distance which is as much as possible length of the seal, to allow full communication between the contents of the compartments. It appeared that for the present use, under forces common during kneading and given the ingredients in the kit, this was optimally achieved using a heat seal, wherein the seal comprises a coating between the two sealed surfaces.

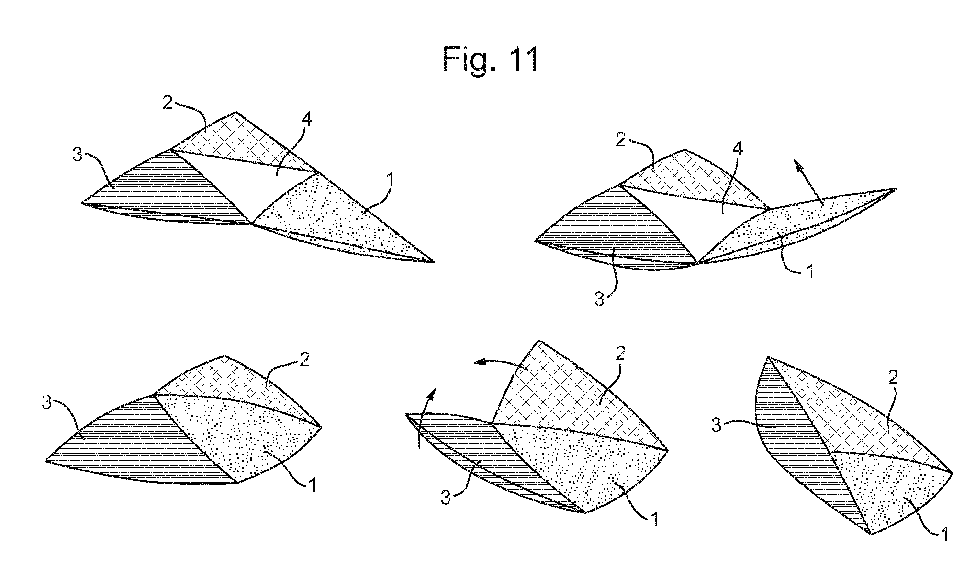

It is particularly preferred, when the compartment, normally the first (1), second (2) and third (3) compartment, are each separated from each other by at least two seals, most preferably by two seals (9). This further reduces the risk of leakage of ingredients into a compartment, thereby spoiling the ingredients in such another compartment. A double-seal separation is conveniently arranged when the bag comprises a fourth compartment (4). Hence, it is preferred, that the bag contains a fourth compartment, which is preferably adjacent to the first, the second and the third compartment. It may be preferred, that the fourth compartment comprises condiments. These condiments can be for example dry or liquid. They can be pieces of chocolate, dried fruit, candy, dried vegetable. The presence of a fourth compartment (4) provides the additional advantage that the kit can be efficiently transported and folded, as illustrated in Figure 11.

The invention further relates to a process to prepare a kit according to the invention, the process comprising the steps of:
a. providing a sheet of thermoplastic polymer material and shaping said sheet into the form of a bag, or providing a bag made of thermoplastic polymer,
b. applying to said sheet in the form of a bag or to said bag ingredients in powdery or granular form, including flour, egg powder and sweetener, and further fat, which fat is liquid at 5 °C, preferably at room temperature, and optionally water and providing seals to it, to result in a bag comprising:
   - a first compartment (1) containing ingredients in powdery or granular form, including flour, egg powder, and sweetener,
   - a second compartment (2) containing fat, which fat is liquid at 5 °C, preferably at room temperature,
   - a third compartment (3) containing water, or is empty,
wherein the seals between the compartments are non-permanent seals, preferably peel seals.

The kit according to the invention is prepared by providing a sheet of thermoplastic polymer material, preferably comprising polymer which is impermeable to water and fat. The material preferably comprises PET, PE, PP or mixtures thereof.

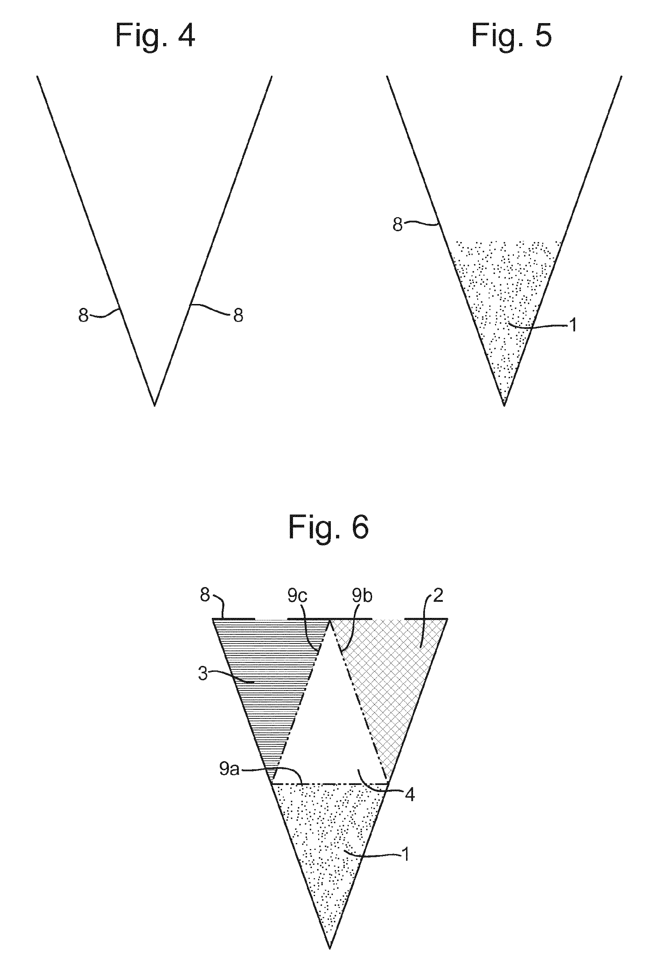

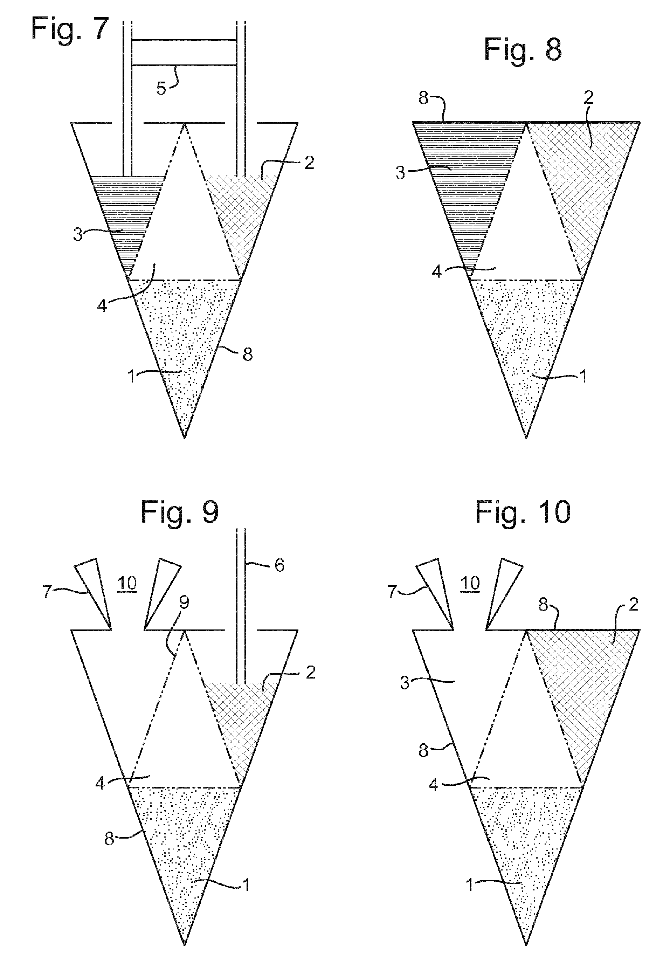

The sheet is folded and sealed to provide the form of a bag. A bag can be understood as two layers of flexible material connected to each other, preferably by permanent seals, to form a two-layered product capable of containing a liquid. This can conveniently be done when the shaping involves folding. It can be preferred that the bag is pre-fabricated, for example a piping bag. In a next step, ingredients, understood by the skilled person as ingredients for a baked food product, are added to the bag or to the bag-shaped sheet, and seals are applied to the bag-shaped sheet or bag. For process efficiency, it is highly preferred, that the powdery and granular ingredients are added to the bag, followed by a seal to form and close the first compartment. After this, preferably the fat is added to the bag. Then the water, if present, is added, in the third compartment to be formed. It can be preferred that the fat and water are added simultaneously in the second and third compartments to be formed, respectively. The By sealing, compartments are provided to the bag or to the bag-shaped sheet and a bag-shaped sheet can be sealed to become a bag, or to close a bag, e.g. by providing outer seals (8). Outer seals define the outside of the bag, and are permanent, i.e. non-breakable and non-peelable, seals. They are non-breakable seals when under pressure applied during kneading. The internal seals (9), which are separating compartments from each other, are non-permanent seals, preferably peelable seals. When the bag is provided from a sheet of thermoplastic polymer foil, permanent seals (8) are preferably applied to provide the outer seals, and non-permanent seals (9), preferably peel seals, are applied to create the borders between compartments. Sealing is carried out by a method as known in the art, and preferably comprises heat sealing, laser sealing or ultrasonic sealing. Peel seals are conveniently applied by using a coating-mediated sealing, wherein a coating is applied between the surfaces to be sealed. Preferably, two or three, preferably three, non-permanent seals, preferably peel seals are applied to the bag. In this way, at least three, preferably three or four, most preferably four, compartments (1), (2), (3), (4), are created. This is conveniently done by providing three seals to form the shape of triangle, preferably when the bag has a triangular shape. As an example, a triangular bag is provided, e.g. by providing two permanent seals (8) to connect two pieces of polymer foil on top of each other or folding one peace, followed by sealing (Figure 4), ingredients in powdery or granular form are added to the bag (Figure 5), followed by a non-permanent seal (9a) (Figure 6), preferably a peel seal, separating the dry ingredients from the rest of the bag, isolating them in a first compartment. Then, a second, non-permanent seal (9b), preferably peel seal is applied creating an open, future second compartment (2). A third non-permanent seal (9c), preferably peel seal is applied, creating a second open, future third compartment (3). It can be preferred to apply the non-permanent seals in one step, as a triangular seal, e.g. by using a triangular seal unit (Figure 6). This one seal can even be applied simultaneously with a seal that forms part of the outer edge, preferably of the upper part, of the bag, thereby applying a permanent seal (8) at an outer edge, possibly with openings in it to allow filling of the second and third compartments. The second and third compartment are respectively filled with liquid fat, preferably liquid water-in oil emulsion or oil-in water emulsion; and with water (Figure 7). Then a permanent seal welds the edge at the outside of the bag (Figure 8), resulting in a closed second and third compartment.

In a further aspect, the present invention relates to a process for preparing a baked food product, the process comprising the steps of:
a. Providing a kit according to the invention,
b. In case the third compartment is empty, adding water to the third compartment and closing it,
c. Kneading the kit to allow opening of the non-permanent seals, preferably peel seals and to allow mixing of the contents of the compartments together to obtain a homogenous mixture,
d. Opening the bag,
f. Transferring the mixture resulting from step c) in a mould,
g. Heating the mixture in the mould,
to result in a baked food product.

For baking a food product, preferably a cake, the present invention provides an easy and efficient manner. The kit of the invention has the advantage that the consumer does not need to weigh the required amount of ingredients, but can start preparing the dough immediately. In this way, the experience of baking is maintained, whereas no further ingredients need to be purchased, no tools are needed and no mixing containers are required. The consumer takes a kit of the invention. In case the third compartment is empty, an aqueous fluid, preferably water is added to the third compartment, after which the third compartment is closed. The consumer then starts kneading the kit. The contents of the compartments are kneaded together. By kneading, forces are generated which open the non-permanent seals, preferably peel seals, between the compartments. The seals between the compartments are preferably peel seals to allow maximum discharge of the respective contents of the compartments to intermix and efficiently form a dough. The mixture after kneading is preferably homogenous, although this is not essential. The kneading of the ingredients is preferably done by hands. Kneading is preferably carried out for a time period of between 30 seconds and 5 minutes, more preferably of between 45 seconds minute and 3 minutes, most preferably of between 1 and 2 minutes. During kneading, the ingredients are preferably at a temperature of between 15 and 30°C, more preferably of between 18 and 25°C. After kneading, the bag is opened, preferably by removing a tip, preferably by cutting a tip of the bag. The mixture resulting from the kneading is transferred into a mould. The mould is then heated. Heating is preferably carried out in an oven. The temperature of heating is preferably of between 120 and 250°C, preferably of from 160 to 200°C. It is in the skill of the artisan, to adjust the heating temperature and the time of heating to obtain a baked food product according to his or her personal taste preference. The baking time can for example range from 10 to 30, preferably of between 10 to 20 minutes.

In this manner, the invention can further relate to a baked food product, obtained by this process of the invention, preferably a sponge cake.

The present invention provides a kit for baking a baked food product, wherein all ingredients for the baked product can be, preferably are, present in the kit.

The invention is now exemplified by the following, non-limiting examples:

### Examples

### Example 1, preparation of a kit of the invention.

A kit according to the invention is prepared by providing a pre-fabricated plastic piping bag from a local shop, made from PP with a content of 1 L. In a next step, 63 grams of self-rising flour, 55 grams of plain white sugar, 8 g of vanilla sugar, 14 grams of egg powder (includes yolk and egg white) and 2 grams milk powder are applied to the bag as ingredients in powdery or granular form (2). With reference to Figure 6, a first breakable seal (9a), is applied above the ingredients in powdery or granular form. Sealing is done via heat-sealing, to apply a peelable seel. A second (9b) and a third (9c) breakable seal is applied, thereby creating a triangular fourth, empty, closed compartment (4) and an open second (2) and third (3) compartment. Then 70 grams of liquid margarine (water-in-oil emulsion), Blueband (Unilever) is added to the second compartment. 61 grams of tap water is applied to the third compartment. A non-breakable seal (8) is applied by heat-sealing. The preparation time took 1 to 2 minutes kneading by hand. The production time can be reduced when production is carried out in a machine.

### Example 2, preparing a baked food product.

A baking kit as prepared according to Example 1 and depicted in Figure 8 is provided. The bag is kneaded by hand for only 2 minutes, thereby applying pressure to the breakable seals that as a result thereof break. The ingredients in powdery or granular form, the liquid margarine and the water was mixed by kneading. Then the bag was opened by cutting a tip from the bag. The content of the bag was squeezed out of the bag in cake moulds with the following dimensions: 80mm upper diameter, 40mm bottom diameter, 40mm height. The cake moulds were placed in an oven, and baked at 180°C for 20 min.

## Claims

1. Kit for preparing a baked food product, the kit comprising a bag with ingredients for the baked food product, wherein the bag contains:
• a first compartment (1) containing ingredients in powdery or granular form, comprising flour, egg powder and sweetener,
• a second compartment (2) containing fat, which fat is liquid at room temperature, preferably at 5°C,
• a third compartment (3) containing water, or is empty,
wherein the bag comprises non-permanent seals (9), preferably peel seals, between the compartments.

2. Kit according to claim 1, wherein the compartments are each separated from each other by at least two seals (9).

3. Kit according to any one of the preceding claims, wherein the bag contains a fourth compartment (4), adjacent to the first, the second and the third compartment.

4. Kit according to any one of the preceding claims, wherein the bag has a triangular shape.

5. Kit according to any one of the preceding claims, wherein the third compartment (3) comprises an opening (10) and closing means (7).

6. Kit according to any one of the preceding claims, wherein the fat is present in a water-in-oil emulsion or an oil in water emulsion.

7. Kit according to any one of the preceding claims, wherein the sweetener comprises sugar.

8. Kit according to any one of the preceding claims, wherein the ingredients in powdery or granular form comprise sugar, flour, milk powder and egg powder.

9. Kit according to any one of the preceding claims, wherein the content of the second compartment (2) consists of a water-in-oil emulsion or an oil-in-water emulsion, and the content of the third compartment consists of water.

10. Kit according to any one of the preceding claims, wherein the content of the kit is free from preservatives.

11. Kit according to any one of the preceding claims, wherein the ingredients in powdery or granular form further comprise a leavening agent.

12. Process to prepare a kit according to any one of the preceding claims, the process comprising the steps of:
a) providing a sheet of thermoplastic polymer foil and shaping said sheet into the form of a bag, or providing a bag made of thermoplastic polymer foil,
b) applying to said sheet in the form of a bag or to said bag ingredients in powdery or granular form, comprising flour, egg powder and sweetener, fat and optionally water and providing non-permanent seals, preferably peel seals, to it, to result in a bag comprising:
• a first compartment (1) containing ingredients in powdery or granular form, comprising flour, egg powder and sweetener,
• a second compartment (2) containing fat, preferably a water in oil emulsion or an oil in water emulsion, which fat is liquid at room temperature, preferably at 5°C,
• a third compartment (3) containing water, or is empty.

13. Process for preparing a baked food product, the process comprising the steps of:
a. Providing a kit according to anyone of claims 1 to 11,
b. In case the third compartment is empty, adding water to the third compartment and closing it,
c. Kneading the kit to allow opening of the non-permanent seals, preferably peel seals, and to allow mixing of the contents of the compartments together to obtain a homogenous mixture,
d. Opening the bag,
f. Transferring the mixture resulting from step c) in a mould,
g. Heating the mixture in the mould,
to result in a baked food product.

14. Process according to claim 13 wherein heating is carried out at a temperature of between 120 and 250°C, preferably of from 160 to 200°C.

15. Process according to claim 13 or 14 wherein the baked food product is a sponge cake, preferably a cup cake or a muffin.
